# EUROPÄISCHE PATENTSCHRIFT

(11) **EP 1 338 531 B1**
(45) Veröffentlichungstag und Bekanntmachung des Hinweises auf die Patenterteilung: **28.07.2004**
(21) Anmeldenummer: 02450173.6
(22) Anmeldetag: 08.08.2002
(51) Int. Cl.: B65G 15/60, B65G 15/04

(54) **Anlage zur Förderung von Schüttgütern**
Installation for conveying bulk materials
Installation pour le transport de matériaux en vrac

(30) Priorität: 21.02.2002 AT 2642002
(43) Veröffentlichungstag der Anmeldung: 27.08.2003
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard, Dipl.-Ing. Patentanwalt

(56) Entgegenhaltungen:
- AU-B- 607 793
- DE-B- 1 004 543
- DE-B- 1 062 173
- GB-A- 2 154 533
- US-A- 2 979 187

## Beschreibung

Die gegenständliche Erfindung betrifft eine Anlage zur Förderung von Schüttgütern mit einem von einer Beladestation zu einer Entladestation bewegbaren Förderband, welches an seinen beiden Seiten mit einer Vielzahl von voneinander im Abstand angeordneten Tragrollen, welche längs einer Tragbahn verfahrbar sind, ausgebildet ist und welches in den Bereichen der Ladestation und der Entladestation über Umlenktrommeln geführt ist, wobei nach der im Bereich der Entladestation befindlichen Umlenktrommel eine Einrichtung vorgesehen ist, durch welche das Förderband um etwa 180° gewendet wird sowie vor der im Bereich der Ladestation befindlichen Umlenktrommel eine Einrichtung vorgesehen ist, durch welche das Förderband um etwa 180° zurückgewendet wird, wobei weiters jede Wendeeinrichtung jeweils durch eine aus Tragrahmen bestehende Tragkonstruktion gebildet ist, innerhalb welcher zwei wendelförmig verlaufende Führungen angeordnet sind, längs welcher die seitlich des Förderbandes angeordneten Tragrollen verfahrbar sind und wobei diese beiden Führungen einander angenähert diametral gegenüberliegen und über die Länge der Tragkonstruktion eine Winkeldrehung von etwa 180 ° ausführen. Eine solche Anlage wird im Dokument DE-A-1 004 543 offenbart.

Bekannte Anlagen zur Förderung von Schüttgütern weisen ein Förderband auf, welches in den Bereichen der beiden Enden der Förderanlage über Umlenktrommeln geführt ist. Diese bekannten Förderanlagen entsprechen jedoch insoferne nicht den an sie gestellten Anforderungen, da die Ladeseite des Förderbandes bei dem von der Entladestation in die Beladestation zurückbewegten Förderband nach unten gerichtet ist, sodaß am Förderband verbliebenes Fördergut von diesem herunterfallen kann. Da hierdurch Gefährdungen von unterhalb der Förderanlage befindlichen Personen, Fahrzeugen und Einrichtungen bedingt werden bzw. jedenfalls das unterhalb der Anlage befindliche Gebiet verunreinigt werden kann, besteht das Erfordernis, unterhalb des Förderbandes Schutzeinrichtungen, z.B. Abdeckungen, anzuordnen.

Um auch das unten befindliche Trum des Förderbandes zur Förderung verwenden zu können, ist es aus der DE-A-1004543 bekannt, das untere Trum des Förderbandes in Förderrichtung nach der ersten Umlenktrommel und vor der zweiten Umlenktrommel um 180 ° zu wenden, wodurch auch beim unteren Trum die Förderseite des Förderbandes nach oben gerichtet ist. Hierdurch wird zudem der vorstehend dargelegte Nachteil bekannter Förderanlagen, daß vom zurücklaufenden Trum am Förderband verbliebene Reste des Fördergutes herunterfallen, vermieden.

Der gegenständlichen Erfindung liegt die Aufgabe zugrunde, die bei einer derartigen Förderanlage verwendete Wendeeinrichtung konstruktiv so zu verbessern, daß sie einfacher herstellbar ist und daß sie funktionell den Anforderungen des Betriebes, bei welchem aufgrund der Art des Fördergutes und bei ungünstigen klimatischen Bedingungen technische Schwierigkeiten auftreten können, besser entspricht, als dies bei bekannten Förderanlagen der Fall ist.

Dies wird erfindungsgemäß dadurch erzielt, daß die Tragkonstruktion durch eine Vielzahl von angenähert ringförmig ausgebildeten Tragrahmen gebildet ist, welche miteinander mittels sich in Längsrichtung der Wendeeinrichtung erstreckender Streben starr verbunden sind und welche an ihren Innenseiten mit jeweils zwei einander diametral gegenüberliegenden Ausnehmungen ausgebildet sind, welche bei nebeneinander angeordneten Tragrahmen winkelversetzt sind und in welchen die Führungen gehalten sind.

Nach einer bevorzugten Ausführungsform sind die Führungen durch zwei Paare von Rohren od.dgl. gebildet, zwischen welchen die Tragrollen verfahrbar sind. Vorzugsweise sind die Führungen an ihren vorderen Enden mit Einlaufschrägen ausgebildet. Weiters sind vorzugsweise an der Oberseite der Tragrahmen zwei in Längsrichtung der Wendeeinrichtung verlaufende Schienen od.dgl. angeordnet, längs welcher die Tragrollen des sich in Förderrichtung bewegenden Trumes des Förderbandes verfahrbar sind.

Nach einer weiteren bevorzugten Ausführungsform ist das Förderband mit seitlichen Wellkanten ausgebildet und ist es weiters mit quer zu dessen Längsrichtung ausgerichteten Tragbalken ausgebildet, an dessen beiden Enden die Tragrollen gelagert sind.

Eine erfindungsgemäße Anlage zur Förderung von Schüttgütern ist nachstehend anhand eines in der Zeichnung dargestellten Ausführungsbeispiels näher erläutert. Es zeigen:
- Fig. 1: eine derartige Förderanlage, in schematischer Darstellung, und
- Fig.2: die Ausbildung der in einer derartigen Förderanlage angeordneten Wendeeinrichtungen, in axonometrischer Darstellung.

In Fig. ist eine Förderanlage dargestellt, welche ein Förderband 1 aufweist, welches im Bereich der Ladestation 10 um eine erste Umlenktrommel 11 und in der Entladestation 10a über eine zweite Umlenktrommel 12 geführt ist. Das Förderband 1 ist mit einer Vielzahl von seitlich außerhalb befindlichen, paarweise angeordneten Tragrollen 13 ausgebildet, welche längs Schienen 14 abrollen. In Richtung der Bewegung des Förderbandes 1 nach der zweiten Umlenktrommel 12 befindet sich eine Wendeeinrichtung 2, durch welche das zur Beladestation 10 zurückbewegte Trum des Förderbandes 1 um 180° gewendet wird, wodurch die Ladeseite des Förderbandes 1 nach oben gerichtet ist. Hierdurch wird verhindert, daß auf dem Förderband 1 verbliebene Reste des Fördergutes während der Zurückbewegung des Förderbandes 1 zur Beladestation 10 vom Förderband 1 herunterfallen. Vor der ersten Umlenktrommel 11 befindet sich eine weitere Wendeeinrichtung 2, durch welche das Förderband 1 um 180° zurückgewendet wird, sodaß dessen Ladeseite nach der ersten Umlenktrommel 11 wieder nach oben gerichtet ist.

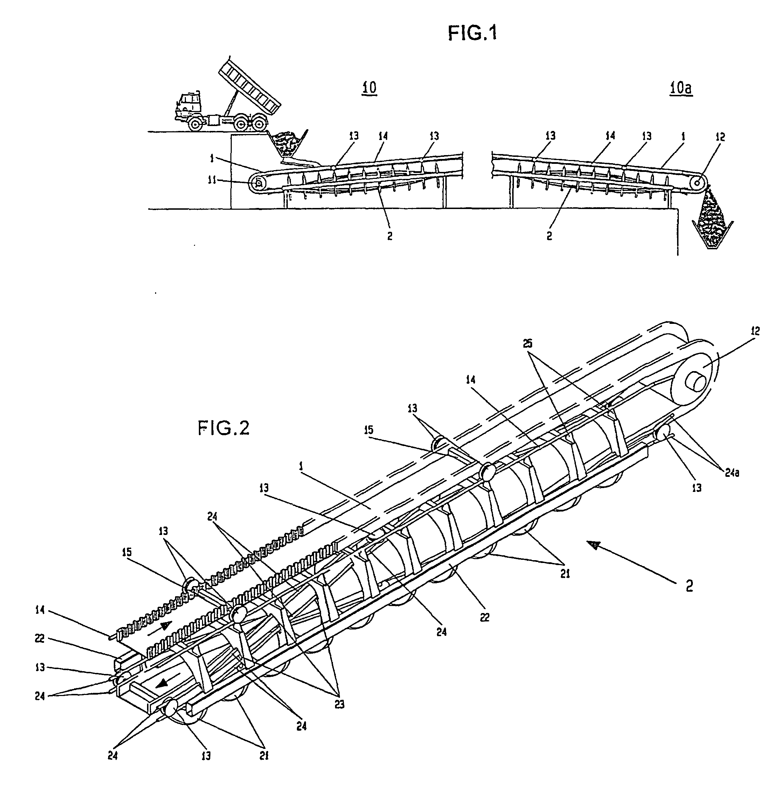

Wie dies aus Fig.2 ersichtlich ist, bestehen die Wendeeinrichtungen 2 aus einer Vielzahl von in Bewegungsrichtung des Förderbandes 1 nebeneinander angeordneten Tragrahmen 21, welche mittels zweier seitlich angeordneter Streben 22 miteinander starr verbunden sind. An den Innenseiten dieser Tragrahmen 21 sind jeweils zwei diametral gegenüberliegende hinterschnittene Ausnehmungen 23 vorgesehen, innerhalb welcher zwei Führungen für die Tragrollen 13 des Förderbandes 1 angeordnet sind. Diese Führungen sind durch zwei Paare von einander angenähert diametral gegenüberliegenden und angenähert parallel verlaufenden Rohren 24 gebildet. Die Ausnehmungen 23 sind in den jeweils nebeneinander angeordneten Tragrahmen 21 gegeneinander derart winkelversetzt, daß die durch die paarweise angeordneten Rohre 24 gebildeten Führungen wendelförmig verlaufen, wobei sie vom einen Ende der Wendeeinrichtung 2 zu deren anderen Ende einen halben Schraubengang bilden. An dem in Bewegungsrichtung des Förderbandes 1 vorderen Ende sind die Rohre 24 mit Einlaufschrägen 24a ausgebildet.

An ihrem oberen Ende sind die Tragrahmen 21 mit Stützen 25 für die zwei oberhalb der Tragrahmen 21 angeordneten weiteren Rohre 14 od.dgl. vorgesehen, längs welcher die Tragrollen 13 des beladenen Trumes des Förderbandes 1 geführt sind. Das Förderband 1 ist insbesondere als Wellkantenband ausgebildet. Die Tragrollen 13 sind an den beiden Enden von Tragbalken 15, an welchen das Förderband 1 befestigt ist, gelagert.

Die Funktion dieser Einrichtung ist wie folgt:
Die Tragrollen 13 des sich oberhalb der Wendeeinrichtung 2 befindlichen Trumes des Förderbandes 1 laufen längs der beiden Paare der Rohre 14. Nachdem das Förderband 1 um die Umlenktrommel 12 herumgeführt worden ist, gelangen die Tragrollen 13 über die Einlaufschrägen 24a in die beiden innerhalb der Tragrahmen 21 angeordneten, durch die Paare der Rohre 24 gebildeten Führungen. Bei der Weiterbewegung des Förderbandes 1 erfolgt durch die wendelförmig verlaufenden Führungen ein Wenden des Förderbandes 1 dahingehend, daß am Ende der Wendeeinrichtung 2 die Ladeseite des Förderbandes 1 nach oben gerichtet ist.
Die im Ladebereich 10 vor der ersten Umlenktrommel 11 angeordnete Wendeeinrichtung 2 weist eine dahingehend geänderte Konstruktion auf, daß durch die in dieser vorgesehenen Führungen das Förderband um 180° zurückgewendet wird.

## Patentansprüche

1. Anlage zur Förderung von Schüttgütern mit einem von einer Beladestation (10) zu einer Entladestation (10a) bewegbaren Förderband (1), welches an seinen beiden Seiten mit einer Vielzahl von voneinander im Abstand angeordneten Tragrollen (13), welche längs einer Tragbahn (14) verfahrbar sind, ausgebildet ist und welches in den Bereichen der Ladestation (10) und der Entladestation (10a) über Umlenktrommeln (11, 12) geführt ist, wobei nach der im Bereich der Entladestation (10a) befindlichen Umlenktrommel (12) eine Einrichtung (2) vorgesehen ist, durch welche das Förderband (1) um etwa 180° gewendet wird sowie vor der im Bereich der Ladestation (10) befindlichen Umlenktrommel (11) eine Einrichtung (2) vorgesehen ist, durch welche das Förderband (1) um etwa 180° zurückgewendet wird, wobei weiters jede Wendeeinrichtung (2) jeweils durch eine aus Tragrahmen (21) bestehende Tragkonstruktion gebildet ist, innerhalb welcher zwei wendelförmig verlaufende Führungen (24) angeordnet sind, längs welcher die seitlich des Förderbandes (1) angeordneten Tragrollen (13) verfahrbar sind und wobei diese beiden Führungen (24) einander angenähert diametral gegenüberliegen und über die Länge der Tragkonstruktion eine Winkeldrehung von etwa 180° ausführen, **dadurch gekennzeichnet, daß** die Tragkonstruktion durch eine Vielzahl von angenähert ringförmig ausgebildeten Tragrahmen (21) gebildet ist, welche miteinander mittels sich in Längsrichtung der Wendeeinrichtung (2) erstreckender Streben (22) starr verbunden sind und welche an ihren Innenseiten mit jeweils zwei einander diametral gegenüberliegenden Ausnehmungen (23) ausgebildet sind, welche bei nebeneinander angeordneten Tragrahmen (21) winkelversetzt sind und in welchen die Führungen (24) gehalten sind.

2. Anlage nach Anspruch 1, **dadurch gekennzeichnet, daß** die Führungen durch zwei Paare von Rohren (24) od.dgl. gebildet sind, welche in die Ausnehmungen (23) eingesetzt sind und zwischen welchen die Tragrollen (13) verfahrbar sind.

3. Anlage nach einem der Ansprüche 1 und 2, **dadurch gekennzeichnet, daß** die Führungen (24) an ihren vorderen Enden mit Einlaufschrägen (24a) ausgebildet sind.

4. Anlage nach einem der Ansprüche 1 bis 3, **dadurch gekennzeichnet, daß** an der Oberseite der Tragrahmen (21) zwei in Längsrichtung der Wendeeinrichtung (2) verlaufende Schienen (14) od.dgl. angeordnet sind, längs welcher die Tragrollen (13) des sich in Förderrichtung bewegenden Trumes des Förderbandes (1) verfahrbar sind.

5. Anlage nach einem der Ansprüche 1 bis 4, **dadurch gekennzeichnet, daß** das Förderband (1) mit seitlichen Wellkanten ausgebildet ist.

6. Anlage nach einem der Ansprüche 1 bis 5, **dadurch gekennzeichnet, daß** das Förderband (1) mit quer zu dessen Längsrichtung ausgerichteten Tragbalken (15) ausgebildet ist, an dessen beiden Enden die Tragrollen (13) gelagert sind.

## Claims

1. An installation for conveying bulk materials with a conveyor belt (1) movable from a loading station (10) to a discharge station (10a), which conveyor belt (1) is provided on its two sides with a plurality of mutually spaced support rollers (13) which may travel along a supporting track (14), and which is guided over return drums (11, 12) in the areas of the loading station (10) and the discharge station (10a), wherein a device (2), by means of which the conveyor belt (1) is turned through about 180°, is provided downstream of the return drum (12) situated in the area of the discharge station (10a), and a device (2), by means of which the conveyor belt (1) is turned back through about 180°, is provided upstream of the return drum (11) situated in the area of the loading station (10), wherein furthermore each turning device (2) in each case takes the form of a supporting structure consisting of supporting frames (21), within which there are arranged two helically extending guides (24), along which the support rollers (13) arranged laterally of the conveyor belt (1) may travel and wherein these two guides (24) lie approximately diametrically opposite one another and execute an angular turn of about 180° over the length of the supporting structure, **characterised in that** the supporting structure takes the form of a plurality of approximately annular supporting frames (21), which are connected rigidly together by means of struts (22) extending in the longitudinal direction of the turning device (2) and which are provided on their insides with in each case two diametrically opposing apertures (23), which are angularly offset in adjacent supporting frames (21) and in which the guides are held (24).

2. An installation according to claim 1, **characterised in that** the guides take the form of two pairs of tubes (24) or the like, which are inserted into the apertures (23) and between which the support rollers (13) may travel.

3. An installation according to either one of claims 1 and 2, **characterised in that** the guides (24) are provided at their front ends with lead-in slopes (24a).

4. An installation according to any one of claims 1 to 3, **characterised in that** two rails (14) or the like extending in the longitudinal direction of the turning device (2) are arranged on the top of the supporting frames (21), along which rails (14) the support rollers (13) of the run of the conveyor belt (1) moving in the conveying direction may travel.

5. An installation according to any one of claims 1 to 4, **characterised in that** the conveyor belt (1) is provided with corrugated sidewalls.

6. An installation according to any one of claims 1 to 5, **characterised in that** the conveyor belt is provided with supporting beams (15) oriented transversely relative to the longitudinal direction thereof, at the two ends of which beams (15) the support rollers (13) are mounted.

## Revendications

1. Installation pour le transport de matériaux en vrac, comportant un convoyeur à bande (1) qui est apte à être amené d'une station de chargement (10) à une station de déchargement (10a), qui comporte sur ses deux côtés plusieurs galets porteurs (13) espacés les uns des autres et mobiles le long d'une voie de support (14), et qui, dans la zone de la station de chargement (10) et de la station de déchargement (10a), passe sur des poulies de renvoi (11, 12), étant précisé qu'il est prévu après la poulie de renvoi (12) située dans la zone de la station de déchargement (10a) un dispositif (2) grâce auquel le convoyeur à bande (1) est tourné d'environ 180°, et avant la poulie de renvoi (11) située dans la zone de la station de chargement (10) un dispositif (2) grâce auquel le convoyeur à bande (1) est retourné d'environ 180°, que par ailleurs chaque dispositif inverseur (2) est formé par une construction porteuse qui est composée de châssis porteurs (21) et à l'intérieur de laquelle sont disposés deux guides hélicoïdaux (24) le long desquels les galets porteurs (13) disposés sur les côtés du convoyeur (1) sont mobiles, et que ces deux guides (24) sont à peu près diamétralement opposés et décrivent sur la longueur de la construction porteuse une rotation angulaire d'environ 180°,
**caractérisée en ce que** la construction porteuse est formée par plusieurs châssis porteurs (21) à peu près annulaires qui sont reliés rigidement entre eux à l'aide d'entretoises (22) s'étendant dans le sens longitudinal du dispositif inverseur (2), et qui présentent sur leurs côtés intérieurs deux creux (23) diamétralement opposés qui sont décalés angulairement quand les châssis porteurs (21) sont juxtaposés et dans lesquels les guides (24) sont retenus.

2. Installation selon la revendication 1, **caractérisée en ce que** les guides sont formés par deux paires de tubes (24) ou d'éléments similaires qui sont insérés dans les creux (23) et entre lesquels les galets porteurs (13) sont mobiles.

3. Installation selon la revendication 1 ou 2, **caractérisée en ce que** les guides (24) présentent à leurs extrémités avant des biseaux d'entrée (24a).

4. Installation selon l'une des revendications 1 à 3, **caractérisée en ce qu'**il est prévu sur le côté supérieur des châssis porteurs (21) deux rails (14) ou éléments similaires qui s'étendent dans le sens longitudinal du dispositif inverseur (2) et le long desquels les galets porteurs (13) du brin du convoyeur (1) qui se déplace dans le sens de transport sont mobiles.

5. Installation selon l'une des revendications 1 à 4, **caractérisée en ce que** le convoyeur à bande (1) est pourvu de bords latéraux ondulés.

6. Installation selon l'une des revendications 1 à 5, **caractérisée en ce que** le convoyeur à bande (1) comporte des poutres (15) qui sont orientées transversalement par rapport au sens longitudinal dudit convoyeur et aux deux extrémités desquelles sont montés les galets porteurs (13).
